# EUROPEAN PATENT SPECIFICATION

(11) **EP 0 811 801 B1**
(45) Date of publication and mention of the grant of the patent: **05.03.2003**
(21) Application number: 96109166.7
(22) Date of filing: 07.06.1996
(51) Int. Cl.: F16L 47/00, F16L 33/00, F16L 21/06, F16L 33/22, F16L 19/06

(54) **Pipe fitting**
Rohranschluss
Raccord de tuyau

(43) Date of publication of application: 10.12.1997
(73) Proprietor: MACRIFIN S.p.A., 20121 Milano (IT)
(72) Inventor: Tadini, Mario, 28021 Borgomanero (IT)
(74) Representative: Coloberti, Luigi

(56) References cited:
- EP-A- 0 583 707
- CH-A- 666 950
- DE-A- 1 800 923
- GB-A- 2 129 080
- GB-A- 2 140 113

## Description

The present invention relates to a pipe fitting according to the preamble of Claim 1, for sealingly connecting plastic pipes to an inlet connector of hydraulic apparatus, such as valves, headers and the like, whereby it is possible to use a single type of fitting for sealingly locking plastic pipes of different diameter and/or with walls of different thickness.

The use of plastic pipes for the distribution of hot and/or cold water in sanitary installations and in heating plants is gradually becoming widespread in view of the low cost and the long duration of plastic pipes compared to pipes made of copper or other material.

In order to connect plastic pipes to the various apparatus, various types of fittings have been developed in order to allow mechanical locking and sealing of the pipe with a connector of the apparatus, using various more or less complex systems. Some of these involve the use of a split pressure ring which is simply elastically pressed against the plastic pipe so as to sealingly clamp it against a pipe support sleeve by tightening of a locking nut on the said connector.

A common feature of all these solutions is the need to use a specific fitting for each pipe size, since it is not possible to use the same pressure ring and the same pipe support sleeve for plastic pipes of different diameter. All this involves the need to produce and keep in stock a large variety of fittings of different sizes, resulting in higher production and management costs for the fittings themselves.

Moreover, since the number of plastic pipe manufacturers is constantly increasing and since the dimensional tolerances of the pipe wall diameter and thickness, in addition to differing somewhat from manufacturer to manufacturer, may also vary for the same pipe during manufacture thereof, the result is that it is extremely difficult for installation engineers to use always the same type of fitting. Furthermore, new pipes have appeared on the market, being provided with a plastic protection sheath which, depending on the intended use, must be retained in or removed from the fitting connection zone.

Typical examples of the pipe-fitting previously known, are described in DE-U-9315601.4, CH-A-606.950 and DE-A-4.403.702.

Nevertheless this types of pipe-fittings suffer of some drow-backs, because the sealing and mechanical anchoring are negatively influencing each others, and can not be performed independently and in a controlled mode.

There is also the problem of the availability of plastic pipe fittings which not only provide the necessary hydraulic sealing action between pipe and support sleeve, but also ensure an adequate mechanical connection with the hydraulic apparatus independently of the hydraulic sealing action, such that the plastic pipe cannot accidentally escape from the fitting when subject to a strong pulling force.

The general object of the present invention is therefore to provide a fitting for sealingly connecting plastic pipes to hydraulic apparatus which is able to satisfy the aforementioned requirements.

In particular, an object of the present invention is that of providing a fitting which is versatile in application and can be used with pipes of different diameter or different wall thickness, with the aim of reducing the types of fittings required and consequently aiding the on-site installation engineer who, if he were to use fittings of the traditional type, could experience difficulty in connecting up a pipe to an apparatus, since he could have components which are incompatible with each other.

A further object of the invention is to provide a fitting of the type described which, in addition to providing a good hydraulic sealing action, also ensures a high mechanical strength such that the pipe is unable to unthread from the fitting.

These and other objects are achieved by means of a pipe fitting suitable for mechanically and sealingly connecting a plastic pipe to a connector of a hydraulic apparatus, the pipe fitting comprising:
- a pipe support sleeve which can be axially aligned with the connector of the hydraulic apparatus, said sleeve being provided with a sealing gasket and a circular flange having a cylindrical lip defining an annular seat for receiving an end of the pipe;
- a pressure ring coaxially arranged to said lip to surround the end of the pipe fitted onto the support sleeve, said pressure ring comprising an annular body of plastic material, having an internal cylindrical surface to contact the end of the plastic pipe, and an external cylindrical surface meshing with conical end surfaces;
- the pressure ring comprising, at both-sides, a set of circumferentially space-apart open-end cuts, said open-end cuts, axially extending over a part of the pressure ring; and
- in which the open-end cuts on one end side are provided in intermediate position in respect to the open-end cuts on the other end side of the pressure ring;
- a cup-shaped clamping nut screwable onto a threaded end portion of the connector;
- the conical end surface of the pressure ring, co-acting conical surfaces of the nut and the cylindrical lip to urge said pressure ring against the pipe end, and the same pipe end against a sealing gasket on the pipe support sleeve;
characterised in that:
- the internal cylindrical surface of the pressure ring extends for the entire axial length of the same pressure ring;
- in that the pressure ring has a cross slit to cause a circumferential deformation of the same pressure ring to seal the pipe end against the gasket on the support sleeve, during screwing the clamping nut onto the connector; and
- in that said open-end cuts of the pressure ring are axially extending for a length less than one half of the axial length of the pressure ring, to cause a radial deformation at both side ends of the pressure ring for clamping the-pipe end against the support sleeve during a subsequent screwing of the clamping nut.
The use in the pressure ring of open-end cuts having a length less than one-half of the axial width of the same ring allows to obtain a middle portion of the ring having high rigidity, preventing radial flexure or deformation during a first screwing of the clamping nut.

Therefore said middle portion firstly allows the required sealing pressure to be uniformly performed all around the gasket during a first screwing of the clamping nut, and secondly allows the radial bending of the edges of the ring comprised between the open-end cuts to be performed only after a further screwing-on of the same clamping nut.

The invention will be described in greater detail hereinbelow with reference to the accompanying drawings, in which:
- Fig. 1 is a longitudinal cross-sectional view of a fitting according to the present invention;
- Fig. 2 is a top plan view of the pressure ring;
- Fig. 3 is a bottom plan view of the pressure ring;
- Fig. 4 is a front view along the line 4-4 of Figure 2;
- Fig. 5 is a front view along the line 5-5 of Figure 3;
- Figs. 6 and 7 show two different operational conditions of the fitting for a plastic pipe with a predetermined external diameter;
- Figs. 8 and 9 shows two different operational conditions for a plastic pipe with an external diameter which is greater than that above;
- Fig. 10 is a view, on a larger scale, of a V-shaped cut in the pressure ring;
- Fig. 11 is a diagram illustrating the pipe locking pressures exerted by a pressure ring provided with V-shaped cuts, in different clamping conditions;
- Fig. 12 is a view, on a larger scale, of a Y-shaped cut of the pressure ring;
- Fig. 13 is a diagram illustrating the pipe locking pressures exerted by a pressure ring provided with Y-shaped cuts, in different clamping conditions.

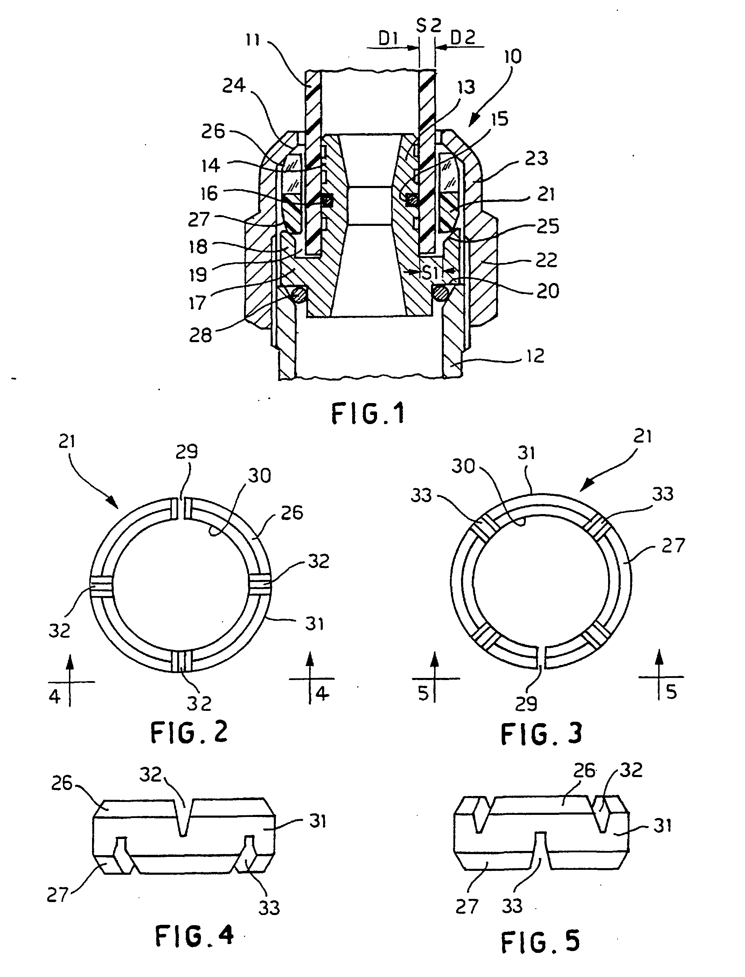

Figure 1 shows a preferred embodiment of a fitting 10 according to the invention for connecting a plastic pipe 11 to the inlet connector 12 of a hydraulic apparatus, not shown. The fitting 10 comprises a metal sleeve 13 with a suitably indented or shaped external profile 14 for allowing firm mechanical anchoring with the internal surface of a plastic pipe 11 inserted onto the sleeve 13.

In order to ensure the necessary hydraulic sealing action, the external surface 14 of the sleeve 13 is provided in a central position with an annular cavity 15 which seats a toroidal gasket 16 designed to form a hydraulic seal against the internal wall of the pipe 11.

The sleeve 13 has, in the vicinity of its internal end, a circular flange 17 formed with a cylindrical lip 18, which is directed towards the rear in a position spaced apart from the external surface 14, so as to define a wide annular seat 19 designed to receive the end of pipes 11 of different diameter and/or different wall thickness; on the opposite side, the flange 17 has a flat surface 20 which rests against the end of the threaded connector 12 forming part of the body of a hydraulic apparatus to be connected.

The fitting 10 comprises, moreover, a pressure ring 21 made of plastic material, one embodiment of which is shown in Figures 2 to 5. As shown in Figure 1, the pressure ring 21 surrounds the end of the pipe 11 and the sleeve 13 over a sufficient length, on either side of the toroidal sealing gasket 16, and comprises a locking nut 22 which can be screwed onto the threaded connector 12; the nut 22 is provided with a cap portion 23 terminating in a conical part 24, the internal surface of which, during screwing of the nut 22 onto the threaded connector 12, interacts with a conical or slanted surface 25 of the peripheral lip 18 of the flange 17 of the pipe support sleeve, as well as with slanted surfaces 26 and 27 at the ends of the pressure ring 21, so as to cause gradual narrowing and deformation of the said ring against the inserted end of a pipe 11, locking it mechanically and sealingly against the internal support sleeve 13.

A second sealing gasket 28 is normally provided between the bottom end of the pipe support sleeve 13 and the end of the connector 12, as shown.

Still with reference to Figure 1, the fitting 10, in order to ensure both a good hydraulic sealing action and mechanical connection with pipes of different diameter or wall thickness, generally has a width S1 of the seat 19 housing the end of the pipe, which is substantially greater than the thickness S2 of the wall of the pipe or in any case such as to be able to receive pipes 11 of different wall thickness or different external diameter. In this way, the fitting 10 according to the invention can be used for connecting plastic pipes 11 of different diameter without the need for replacing the entire fitting or parts thereof.

Figures 2 to 5 show various views of a possible embodiment of the pressure ring 21.

The pressure ring 21 is made of elastically yielding and partially deformable plastic material, for example plastic which is marketed under the name "Hosta-form". As shown, the ring 21 has a narrow transverse slit 29 and is defined by an internal cylindrical surface 30 which extends over the entire axial length of the ring since it is intended to come into contact with the plastic pipe 11, and by an external cylindrical surface 31 which extends over part of the central zone of the ring, terminating with the chamfered edges 26 and 27.

The internal cylindrical surface 30 of the pressure ring 21 has a diameter equal to or slightly greater than the maximum permissible external diameter of the pipes to be connected, for example a diameter slightly smaller than that of the internal peripheral surface of the lip 18 which defines the cavity 19, while the slanted surfaces of the chamfers 26 and 27 are intended to come into contact, respectively, with corresponding slanted surfaces 24 of the cap 23 of the clamping nut and with the slanted internal surface 25 of the lip 18 which defines peripherally the flange 17 of the pipe anchoring sleeve. Preferably the surfaces of the chamfers 26 and 27 of the pressure ring 21 have a different inclination, for example greater than that of the slanted surfaces 24 and 25 mentioned above.

According to the example shown, the pressure ring 21 has, on one side, a first set of V-shaped cuts 32 which are angularly spaced apart from one another and which extend longitudinally over half the length of the ring, from one end thereof, and also has, on the other side, a second set of open-end Y-shaped cuts 33 which extend from the other end of the ring in angularly intermediate positions with respect to the cuts 32.

Preferably the V-shaped and Y-shaped cuts have a length or depth equal to or less than half the length of the ring, and an angular opening of between 18° and 24°, thus giving the entire ring a sinusoidal type configuration in the circumferential direction, capable of being elastically deformed in both the circumferential and radial directions, substantially over a part or the entire height thereof.

This capacity of the pressure ring for circumferential or radial deformation constitutes an innovative feature of the connection fitting according to the present invention, as a result of which it has been possible to achieve, as a specific object, that dimensional and applicational flexibility such that it can be used with pipes of different diameter.

In the example shown in Figures 2 to 5, the ring 21 is provided with a series of V-shaped cuts on one side and with Y-shaped cuts on the other side; however, depending on the specific requirements, it is possible to form rings with V-shaped or Y-shaped cuts on both sides.

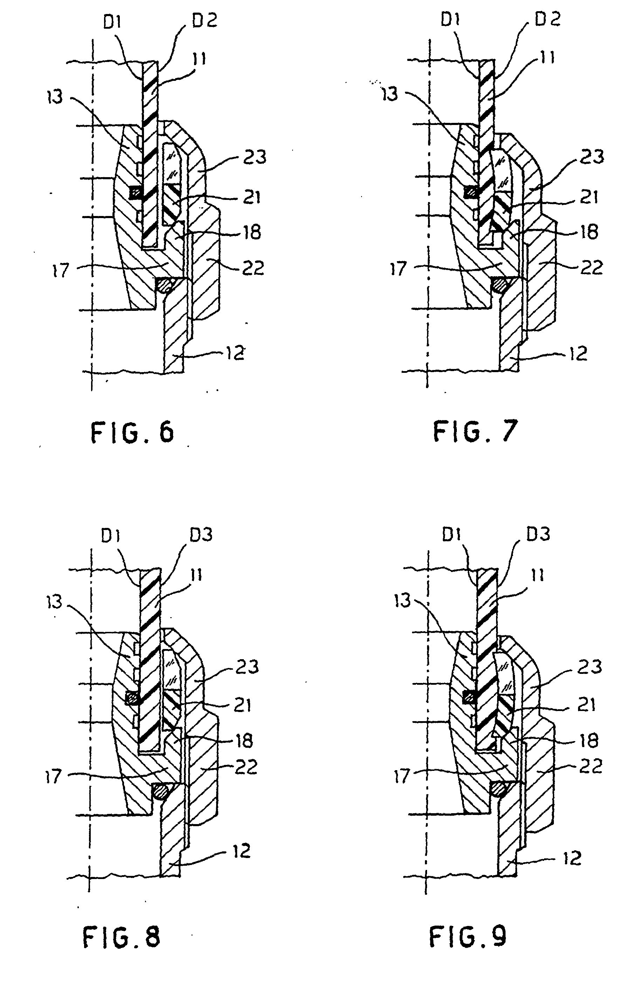

With reference now to Figures 6 to 9, we shall briefly illustrate the applicational features of a fitting according to the invention.

Figures 6 and 8 show the fitting with the pressure ring 21 in the condition where the clamping nut 22 has just been screwed onto the connector 12; the nut 22 does not exert any radial thrusting force on the ring 21, which therefore has a given nominal internal diameter designed to receive a pipe 11 with the maximum permissible diameter. In the case of Figure 6, the pipe 11 has an internal diameter D1 which matches the external diameter of the pipe support sleeve 17, as well as an external diameter D2 corresponding to the minimum permissible diameter for the pipes which can be locked with said fitting. On the other hand, Figure 8 shows the same condition for a pipe 11 which again has an internal diameter D1 equal to that above, and an external diameter D3 greater than or similar to the maximum diameter which can accepted by the fitting. As can be noted from the aforementioned figures, the end of the pipes in both cases fits perfectly into the annular seat 19 of the flange 17.

Figures 7 and 9, on the other hand, show the condition of the two cases indicated above, after the clamping nut 22 has been screwed and after the slanted surface 24 of the cap 23 has cooperated with the slanted surface 25 of the peripheral edge of the flange 17 so as to close circumferentially and radially deform the pressure ring 21 against the external surface of the pipe 11, clamping and locking the latter in a sealing manner against the O-ring seal 16, locking it moreover mechanically against the external toothing 14 of the pipe support sleeve.

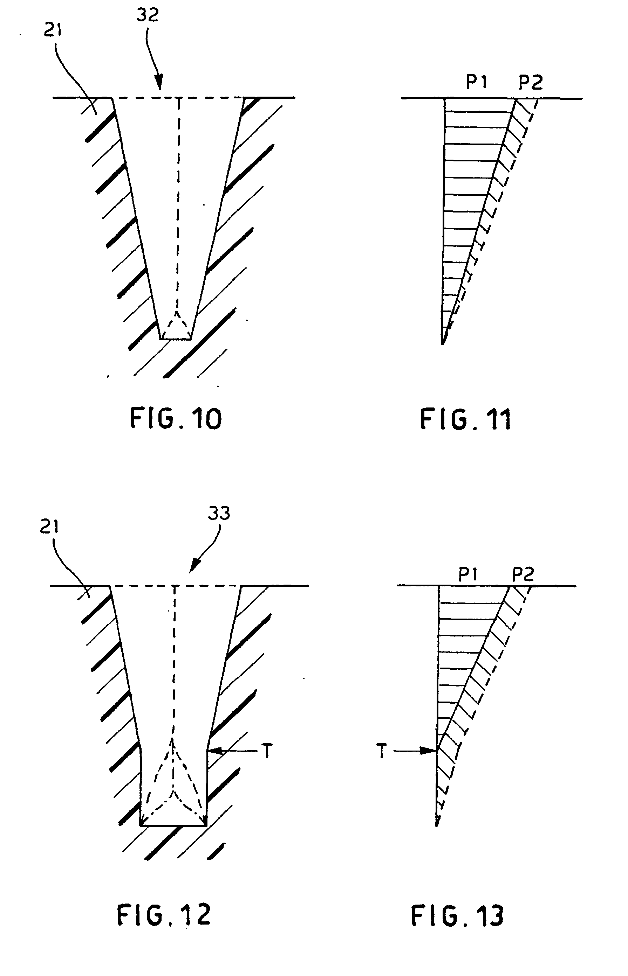

The solution proposed is extremely advantageous in that the hydraulic seal of the fitting is entirely independent of the mechanical anchoring of the pipe and consequently the degree of tightening of the clamping nut. In fact, after the internal surface of the pipe 11 has come into contact with the external surface 14 of the sleeve 13, compressing with the appropriate pressure the O-ring 16, further tightening of the nut 22 and consequent greater deformation of the pressure ring 21 simply increases the strength of the mechanical connection between the fitting 10 and the plastic pipe 11; this will be explained in greater detail below with reference to Figures 10 to 13.

In particular, comparing Figures 6 and 8 with Figures 7 and 9, it can be noted that the chamfered edges 26 and 27 of the pressure ring 21 form, with respect to the longitudinal axis of the fitting, an acute angle which is less than the corresponding angle of the slanted surfaces 24 of the clamping cap 23 and the internal edge 25 of the flange 17, respectively. By way of a guide, the chamfered edges of the ring form an angle of 30°, while the surface 24 of the cap 23 forms an angle of 45°; in general, a small difference between the two angles, for example in the range of about 5-20°, is sufficient to allow deformation of the edges of the ring 21 against the inclined surfaces of the cap 23 and the flange 17, obtaining in this way gentle and homogeneous clamping over the entire circumference of the fitting.

Tests and experiments have shown that, with the fittings according to the present invention, a good hydraulic sealing action is obtained even at the high pressures normally used in large heating plants, as well as strong mechanical anchoring of the pipe to the fitting. In some cases, pulling forces of up to and even greater than approximately 200 kg have been possible, resulting in the plastic pipe being deformed before it comes out of the connection.

As mentioned above, the presence of the cuts 32, 33 assists radial and circumferential deformation of the ring 21, facilitating the hydraulic sealing action and improving mechanical anchoring of the pipe 11 to the sleeve 14 of the fitting 10; in particular, the V or Y shape of the open-end cuts modifies the distribution of the pressures exerted by the ring 21 against the pipe 21.

In the case of Figures 10 and 11, assuming that the nut 22 is tightened until the edges of the V-shaped cuts 32 touch each other, as shown in broken lines in Figure 10, there will be a triangular distribution of the pressure P, in the axial direction of the ring 21 which, from the maximum value P1 at the external edge of the ring, will gradually decrease until it reaches zero at the bottom of the incision. At this point, further tightening of the nut 22 will modify slightly the distribution of the pressures, as indicated at P2.

Figures 12 and 13 show the same conditions in the case of the Y-shaped cuts 33. In this case, the pressure from P1 will be reduced to zero at the point T where the slanted sides of the cut are meshing with the parallel sides of the bottom of the said cut; differently from the case above, further tightening of the locking nut 22 will cause a distribution of the pressure P2 indicated by broken lines in Figure 13, owing to further yielding or deformation of the ring in the zone corresponding to the bottom of the cuts. In this way it is possible to obtain overall a greater mechanical anchoring strength of the connection between plastic pipe 11 and sleeve 13 of the fitting.

From the above description and illustrations in the various figures it can be understood that an extremely effective and reliable fitting for plastic pipes has been provided, which is able to ensure a strong mechanical locking action and a good hydraulic seal uniformly over the entire circumference of the pipe, independently of its external diameter, while at the same time maintaining small dimensions for the fitting, comparable with those of conventional fittings, since the use of the novel ring in a fitting according to the invention does not involve any modification of the various components of the entire fitting.

## Claims

1. A pipe fitting suitable for mechanically and sealingly connecting a plastic pipe (11) to a connector (12) of a hydraulic apparatus, the pipe fitting (10) comprising:
- a pipe support sleeve (13) which can be axially aligned with the connector (12) of the hydraulic apparatus, said sleeve (13) being provided with a sealing gasket (16) and a circular flange (17) having a cylindrical lip (18) defining an annular seat (19) for receiving an end of the pipe (11);
- a pressure ring (21) coaxially arranged to said lip (18) to surround the end of the pipe (11) fitted onto the support sleeve (13), said pressure ring (21) comprising an annular body of plastic material, having an internal cylindrical surface (30) to contact the end of the plastic pipe (11), and an external cylindrical surface (31) meshing with conical end surfaces (26, 27);
- the pressure ring (21) comprising, at both-sides, a set of circumferentially spaced-apart open-end cuts (32, 33), said open-end cuts (32, 33) axially extending over a part of the pressure ring (21); and
- in which the open-end cuts (32) on one end side are provided in intermediate position in respect to the open-end cuts (33) on the other end side of the pressure ring (21);
- a cup-shaped clamping nut (22) screwable onto a threaded end portion of the connector (12);
- the conical end surfaces (26, 27) of the pressure ring (21), co-acting conical surfaces (24, 26; 25) of the nut (23) and the cylindrical lip (18) to urge said pressure ring (21) against the pipe end (11), and the same pipe end (11) against a sealing gasket (16) on the pipe support sleeve (13);
**characterised in that**:
- the internal cylindrical surface (30) of the pressure ring (21) extends for the entire axial lenght of the same pressure ring (21);
- **in that** the pressure ring (21) has a cross slit (29) to cause a circumferential deformation of the same pressure ring (21) to seal the pipe end (11) against the gasket (16) on the support sleeve (13), during screwing the clamping nut (22) onto the connector (12); and
- **in that** said open-end cuts (32, 33) of the pressure ring (21) are axially extending for a length less than one half of the axial length of the pressure ring (21), to cause a radial deformation at both side ends of the pressure ring (21) for clamping the pipe end (11) against the support sleeve (13) during a subsequent screwing of the clamping nut (22) .

2. Pipe fitting according to Claim 1,
**characterised in that** the open-end cuts (32) on at least one side of the pressure ring (21) have a V- shaped configuration.

3. Pipe fitting according to Claim 1,
**characterised in that** the open-end cuts (33) on at least one side of the pressure ring (21), have a y-shaped configuration.

4. Pipe fitting according to Claim 1,
**characterised in that** the open-end cuts (32) on one side of the pressure ring (21), have a V-shaped configuration, and the open-end cuts (33) on the opposite sides of the pressure ring (21) have a y-shaped configuration.

5. Pipe fitting according to any one of Claims 2, 3 and 4 **characterised in that** the V-shaped and/or y-shaped open-end cuts (32, 33) have an angular opening of between 18° and 24°.

6. Pipe fitting according to Claim 1, **characterised in that** said pipe support sleeve (13) is provided with an external toothing (14) for anchorage of the pipe (11).

## Patentansprüche

1. Rohranschlußstück, das ein Kunststoffrohr (11) mit einem Verbinder (12) einer hydraulischen Vorrichtung mechanisch und dicht verbinden kann, wobei das Rohranschlußstück (10) umfaßt:
- eine Rohrunterstützungshülse (13), die auf den Verbinder (12) der hydraulischen Vorrichtung axial ausgerichtet werden kann, wobei die Hülse (13) mit einer Dichtung (16) und einem kreisförmigen Flansch (17) mit einer zylindrischen Lippe (18), die einen ringförmigen Sitz (19) für die Aufnahme eines Endes des Rohrs (11) definiert, versehen ist;
- einen Druckring (21), der koaxial zu der Lippe (18) angeordnet ist und das Ende des Rohrs (11), das auf die Unterstützungshülse (13) gesetzt ist, umgibt, wobei der Druckring (21) einen ringförmigen Körper aus Kunststoff umfaßt, der eine innere zylindrische Oberfläche (30), die mit dem Ende des Kunststoffrohrs (11) in Kontakt gelangen soll, und eine äußere zylindrische Oberfläche (31), die mit konischen Stirnflächen (26, 27) in Eingriff ist, besitzt;
- wobei der Druckring (21) auf beiden Seiten eine Gruppe von in Umfangsrichtung beabstandeten Einschnitten (32, 33) mit offenem Ende aufweist, die sich axial über einen Teil des Druckrings (21) erstrecken; und
- in dem die Einschnitte (32) mit offenem Ende auf einer Stirnseite an einer Zwischenposition in bezug auf die Einschnitte (33) mit offenem Ende an der anderen Stirnseite des Druckrings (21) vorgesehen sind;
- eine becherförmige Klemmutter (22), die auf einen Gewindeendabschnitt des Verbinders (12) aufschraubbar ist;
- wobei die konischen Stirnflächen (26, 27) des Druckrings (21) mit konischen Oberflächen (24, 26; 25) der Mutter (23) und mit der zylindrischen Lippe (18) zusammenwirken, um den Druckring (21) gegen das Rohrende (11) zu drängen und um dasselbe Rohrende (11) gegen eine Dichtung (16) an der Rohrunterstützungshülse (13) zu drängen;
**dadurch gekennzeichnet, daß**:
die innere zylindrische Oberfläche (30) des Druckrings (21) sich über die gesamte axiale Länge dieses Druckrings (21) erstreckt;
daß der Druckring (21) einen Querschlitz (29) besitzt, der eine Umfangsverformung dieses Druckrings (21) bewirkt, um das Rohrende (11) während des Schraubens der Klemmutter (22) auf den Verbinder (12) gegen die Dichtung (16) an der Unterstüzungshülse (13) abzudichten; und
- daß die Einschnitte (32, 33) mit offenem Ende des Druckrings (21) sich über eine Länge erstrecken, die kleiner als die halbe axiale Länge des Druckrings (21) ist, um eine radiale Verformung an beiden Seitenenden des Druckrings (21) zu bewirken, um während des nachfolgenden Aufschraubens der Klemmutter (22) das Rohrende (11) gegen die Unterstützungshülse (13) festzuklemmen.

2. Rohranschlußstück nach Anspruch 1, **dadurch gekennzeichnet, daß** die Einschnitte (32) mit offenem Ende an wenigstens einer Seite des Druckrings (21) eine V-förmige Konfiguration besitzen.

3. Rohranschlußstück nach Anspruch 1, **dadurch gekennzeichnet, daß** die Einschnitte (33) mit offenem Ende an wenigstens einer Seite des Druckrings (21) eine Y-förmige Konfiguration besitzen.

4. Rohranschlußstück nach Anspruch 1, **dadurch gekennzeichnet, daß** die Einschnitte (32) mit offenem Ende auf einer Seite des Druckrings (21) eine V-förmige Konfiguration besitzen und die Einschnitte (33) mit offenem Ende an den gegenüberliegenden Seiten des Druckrings (21) eine Y-förmige Konfiguration besitzen.

5. Rohranschlußstück nach einem der Ansprüche 2, 3 und 4, **dadurch gekennzeichnet, daß** die V-förmigen und/oder Y-förmigen Einschnitte (32, 33) mit offenem Ende eine Winkelöffnung zwischen 18° und 24° besitzen.

6. Rohranschlußstück nach Anspruch 1, **dadurch gekennzeichnet, daß** die Rohrunterstützungshülse (13) mit einer äußeren Zahnung (14) für eine Verankerung des Rohrs (11) versehen sind.

## Revendications

1. Raccord de tuyau adapté pour connecter mécaniquement et hermétiquement un tuyau en plastique (11) à un connecteur (12) d'un appareil hydraulique, le raccord (10) de tuyau comprenant :
- un manchon de support (13) de tuyau qui peut être aligné axialement avec le connecteur (12) de l'appareil hydraulique, ledit manchon (13) étant muni d'un joint d'étanchéité (16) et d'une bride circulaire (17) ayant une lèvre cylindrique (18) définissant un siège annulaire (19) pour recevoir une extrémité du tuyau (11) ;
- un anneau de pression (21) disposé coaxialement à ladite lèvre (18) pour entourer l'extrémité du tuyau (11) montée sur le manchon de support (13), ledit anneau de pression (21) comprenant un corps annulaire en matière plastique, ayant une surface cylindrique intérieure (30) pour le contact avec l'extrémité du tuyau en plastique (11), et une surface cylindrique extérieure (31) se mettant en prise avec des surfaces d'extrémité coniques (26, 27);
- l'anneau de pression (21) comprenant, des deux côtés, un ensemble d'entailles (32, 33) à extrémité ouverte et circonférentiellement espacées, lesdites entailles à extrémité ouverte (32, 33) s'étendant axialement sur une partie de l'anneau de pression (21); et
- dans lequel les entailles à extrémité ouverte (32) réalisées sur un côté d'extrémité sont réalisées dans une position intermédiaire par rapport aux entailles à extrémité ouverte (33) réalisées sur l'autre côté d'extrémité de l'anneau de pression (21);
- un écrou de serrage en forme de coupelle (22) pouvant être vissé sur une partie d'extrémité filetée du connecteur (12);
- les surfaces d'extrémité coniques (26, 27) de l'anneau de pression (21), des surfaces coniques co-agissant (24, 26 ; 25) de l'écrou (23) et de la lèvre cylindrique (18) pour pousser ledit anneau de pression (21) contre l'extrémité du tuyau (11), et la même extrémité de tuyau (11) contre un joint d'étanchéité (16) sur le manchon de support (13) de tuyau ;
**caractérisé en ce que** :
- la surface cylindrique intérieure (30) de l'anneau de pression (21) s'étend sur toute la longueur axiale de ce même anneau de pression (21);
- **en ce que** l'anneau de pression (21) comporte une fente transversale (29) pour provoquer une déformation circonférentielle de ce même anneau de pression (21) pour étanchéifier l'extrémité du tuyau (11) contre le joint (16) sur le manchon de support (13), pendant le vissage de l'écrou de serrage (22) sur le connecteur (12); et
- **en ce que** lesdites entailles à extrémité ouverte (32, 33) de l'anneau de pression (21) s'étendent axialement sur une longueur inférieure à la moitié de la longueur axiale de l'anneau de pression (21), pour provoquer une déformation radiale aux extrémités des deux côtés de l'anneau de pression (21) pour serrer l'extrémité du tuyau (11) contre le manchon de support (13) pendant un vissage subséquent de l'écrou de serrage (22).

2. Raccord de tuyau selon la revendication 1, **caractérisé en ce que** les entailles à extrémité ouverte (32) sur au moins un côté de l'anneau de pression (21) ont une configuration en forme de V.

3. Raccord de tuyau selon la revendication 1, **caractérisé en ce que** les entailles à extrémité ouverte (33) sur au moins un côté de l'anneau de pression (21) ont une configuration en forme de Y.

4. Raccord de tuyau selon la revendication 1, **caractérisé en ce que** les entailles à extrémité ouverte (32) sur un côté de l'anneau de pression (21), ont une configuration en forme de V, et les entailles à extrémité ouverte (33) sur les côtés opposés de l'anneau de pression (21) ont une configuration en forme de Y.

5. Raccord de tuyau selon l'une quelconque des revendications 2, 3 et 4, **caractérisé en ce que** les entailles à extrémité ouverte (32, 33) en forme de V et/ou en forme de Y ont une ouverture angulaire comprise entre 18° et 24°.

6. Raccord de tuyau selon la revendication 1, **caractérisé en ce que** ledit manchon de support (13) de tuyau est muni d'une denture extérieure (14) pour l'ancrage du tuyau (11).
